# EUROPÄISCHE PATENTSCHRIFT

(11) **EP 1 832 387 B1**
(45) Veröffentlichungstag und Bekanntmachung des Hinweises auf die Patenterteilung: **09.01.2008**
(21) Anmeldenummer: 06004702.4
(22) Anmeldetag: 08.03.2006
(51) Int. Cl.: B24B 13/00, B24B 17/00, B24B 19/14, B24B 19/20, B24D 7/18, B23C 3/16, B23C 3/18, B23C 3/20

(54) **Verfahren zur spanenden Bearbeitung gekrümmter Werkstückoberflächen**
Method for machining curved workpiece surfaces
Procédé d'usinage de surfaces courbes

(43) Veröffentlichungstag der Anmeldung: 12.09.2007
(73) Patentinhaber: Andreas Witte Technische Neuentwicklungen, 21335 Lüneburg (DE)
(72) Erfinder: Witte, Andreas, 21335 Lüneburg (DE)
(74) Vertreter: von Eichel-Streiber, Caspar

(56) Entgegenhaltungen:
- WO-A-95/09062
- WO-A-98/55261
- PATENT ABSTRACTS OF JAPAN Bd. 2000, Nr. 23, 10. Februar 2001 (2001-02-10) & JP 2001 150320 A (OLYMPUS OPTICAL CO LTD), 5. Juni 2001 (2001-06-05)

## Beschreibung

Die Erfindung betrifft ein Verfahren zur spanenden Bearbeitung gekrümmter Werkstückoberflächen gemäß dem Oberbegriff des Patentanspruchs 1.

Vergleichbare Verfahren sind aus dem Stand der Technik bekannt und werden in vielfältiger Weise eingesetzt. Unter spanender Bearbeitung im Sinne dieser Erfindung ist dabei jegliches Formgebungsverfahren zu verstehen, bei dem das Werkstück mittels abrasivem Materialabtrages in die gewünschte Form gebracht wird. Insbesondere stellen Schleifen und Fräsen, aber auch Polieren spanende Bearbeitungsgänge im Sinne der Erfindung dar.

Bekannte Verfahren zum spanenden Bearbeiten von Werkstückoberflächen verwenden z.B. im Falle des Fräsens häufig kreiszylinderförmige Fräswerkzeuge, die am Rand einer unteren, kreisförmigen Stirnfläche umfangsseitig und damit im wesentlichen entlang eines Kreises angeordnete Frässchneiden aufweisen. Derartige Fräswerkzeuge werden regelmäßig für die Bearbeitung von flachen bzw. ebenen Werkstückflächen verwendet. Das Fräswerkzeug wird dabei vollflächig mit seiner unteren Stirnfläche auf das Werkstück aufgesetzt und bearbeitet dieses entlang einer Arbeitsbreite, die dem Durchmesser der Stirnfläche entspricht. Im Falle zu erzeugender bzw, zu bearbeitender gekrümmter Werkstückoberflächen wird selten ein solches Fräswerkzeug verwendet, wobei dieses dann mit seiner unteren Stirnfläche planparallel zu einer Tangentialebene in einem Bearbeitungspunkt aufgesetzt wird. Dadurch entsteht eine im wesentlichen punktuelle Bearbeitung, was für die Bearbeitung eines kompletten Werkstückes ein zeilenartiges Abarbeiten mit einer hohen Zeilenzahl bei geringer Zeilenbreite und damit eine entsprechende Bearbeitungsdauer bedeutet.

Häufiger wird für die Bearbeitung von gekrümmten Oberflächen ein kugelförmig geformtes Fräswerkzeug (oder Schleifwerkezeug) verwendet, das mit einem Punkt seiner Kugeloberfläche mit der zu bearbeitenden Werkstückoberfläche in Kontakt gebracht wird. Auch hierbei entsteht in einem Bearbeitungspunkt eine nahezu punktuelle Bearbeitung mit einer äußerst geringen Bearbeitungsbreite. Damit ist auch hier ein Abfahren des zu bearbeitenden Werkstückes mit dem Bearbeitungswerkzeug (Fräs- bzw. Schleifwerkzeug) in einer hohen Vielzahl von Zeilen mit geringer Zeilenbreite erforderlich, um dem gesamten Werkstück mit der Bearbeitung die gewünschte Form geben zu können.

Im Ergebnis sind also die bekannten Verfahren zum spanenden Bearbeiten gekrümmter Werkstückoberflächen in einem hohen Maße zeitaufwendig und damit kostenintensiv. Hinzu kommt, dass bei der langwierigen Bearbeitung auch ein entsprechend hoher Werkzeugverschleiß hingenommen werden muss. Auch bringt eine lange Bearbeitung einen entsprechend erhöhten Energieverbrauch mit sich. Schließlich ergeben sich bei einer lang andauernden Bearbeitung Probleme hinsichtlich der Genauigkeit der Bearbeitung, da Werkstückverformungen aufgrund von während der Bearbeitung auftretenden Temperaturschwankungen auftreten und nur mit erheblichem Aufwand zu kompensieren sind.

In der WO 95/09062 A1 ist ein Verfahren beschrieben, bei dem zum Fräsen eines entlang einer Hauptachse gestreckten Turbinenschaufelprofils ein kreisringförmiges Fräsmesser verkippt über die zu bearbeitende Oberfläche geführt wird, um breitere Bearbeitungsbahnen mit an die Zielkrümmung angenährten Radienverläufen zu erhalten. Dies ist hier mit dem Bild einer elliptischen Projektion beschrieben, wie insbesondere in den Figuren 9 und 10 dieser Schrift zu erkennen ist. Eine Verkippung der Rotationsachse des kreisringförmigen Fräsmessers erfolgt bei dem hier beschriebenen Verfahren allerdings nur so, dass das Fräsmesser mit seiner Werkzeuglängsachse (der Rotationsachse) innerhalb einer durch die Flächennormale der Werkstückoberfläche an dem Bearbeitungspunkt und die innerhalb der Tangentialebene der Werkstückoberfläche an dem Bearbeitungspunkt liegende Tangente des Bearbeitungsweges in dem Bearbeitungspunkt aufgespannten Ebene gegenüber der Flächennormalen gekippt ist. Nur so lässt sich nämlich der gezeigte symmetrische Verlauf der elliptischen Annährungslinie um einen "Bearbeitungspunkt" herum erreichen.

Mit dem in diesem Dokument beschriebenen Verfahren lassen sich für gekrümmte Oberflächen mit jedenfalls in einer Erstreckungsrichtung weitgehend regelmäßigem Verlauf breitere Bearbeitungsbahnen und damit schnellere Bearbeitungszeiten erzielen. Allerdings ist dieses Verfahren nicht mehr anwendbar, wenn die zu bearbeitenden Oberflächen zumindest in Abschnitten in allen Erstreckungsrichtungen komplexere Krugmungsverläufe aufweisen (so genannte "Freiflächen") oder gar taschenartige, abrupte Kantenverläufe aufweisen.

Hier soll mit der Erfindung Abhilfe geschaffen werden. Es ist daher Aufgabe der Erfindung, ein Verfahren zur spanenden Bearbeitung gekrümmter Werkstückoberflächen anzugeben, welches auch bei der Bearbeitung von "Freiflächen" eine gegenüber den bekannten Verfahren schnellere und damit kostengünstigere Bearbeitung ermöglicht.

Diese Aufgabe wird erfindungsgemäß gelöst durch ein Verfahren mit den Merkmalen des Patentanspruches 1. Vorteilhafte Weiterbildungen und Ausgestaltungen der Erfindung sind in den abhängigen Ansprüchen 2 bis 6 angegeben.

Bei dem erfindungsgemäßen Verfahren kann gleichermaßen mit Hilfe eines zylinder- oder kegelförmigen Bearbeitungswerkzeuges mit einer im wesentlichen kreis- bzw. kreisringförmigen Arbeitskante durch relatives Verkippen der Werkzeuglängsachse gegenüber der Flächennormalen der zu bearbeitenden Werkstückoberfläche ein Radienverlauf mit einem im Bereich eines Bearbeitungspunktes liegenden, beliebigen Radius zwischen dem Radius der Arbeitskante und einem unendlichen Radius eingestellt werden. Am einfachsten lässt sich dies veranschaulichen anhand des auch in der WO 95/09062 A1 bemühten folgenden Gedankenexperimentes:

Man stelle sich einen Kreis vor, der in einer Ebene parallel zu einer Projektionsebene liegt. Die Projektion dieses Kreises auf die Projektionsebene bildet wiederum einen Kreis ab. Wird die Ebene des Kreises nunmehr gegenüber der Projektionsebene verkippt, so ergibt sich in der Projektion eine Ellipse, die in ihrem schwächer gekrümmten Bereich einen grö-ßeren Radius aufweist als der Radius des Kreises. Je nach Winkel zwischen diesen Ebenen wird die Ellipse flacher und damit der Radius in dem Bereich der geringeren Krümmung der Ellipse größer.

Diese Eigenschaft macht sich auch das erfindungsgemäße Verfahren zu nutze, indem abhängig von einem in einem Bereich um einen Bearbeitungspunkt vorgegebenen Zielradius ein entsprechend durch Verkippung der Werkzeuglängsachse gegenüber der Flächennormalen abgebildeter "virtueller" Radienverlauf des Bearbeitungswerkzeuges eingestellt wird, der im Wesentlichen einer elliptischen Bahn folgt. Je nach Vorgabe einer Toleranz kann auf diese Weise in einem größeren Bereich eine innerhalb der Toleranz zu der vorgegebenen Krümmung der Werkstückoberfläche liegende Krümmung bzw. ein solcher Radienverlauf generiert werden. Dies bedeutet in der Konsequenz eine deutliche Verbreitung der nutzbaren Arbeitsbreite und damit der Zeilenbreite bei einer zeilenartigen Abarbeitung der Werkstückoberfläche.

Gemäß der Erfindung wird das Bearbeitungswerkzeug zum einen (wie aus dem Stand der Technik bereits bekannt) mit seiner Werkzeuglängsachse in solcher Weise verkippt, dass das es mit seiner Werkzeuglängsachse (der Rotationsachse) innerhalb einer durch die Flächennormale der Werkstückoberfläche an dem Bearbeitungspunkt und die innerhalb der Tangentialebene der Werkstückoberfläche an dem Bearbeitungspunkt liegende Tangente des Bearbeitungsweges in dem Bearbeitungspunkt aufgespannten Ebene gegenüber der Flächennormalen gekippt ist, also im wesentlichen in Richtung des Fortschreitens des Werkzeuges bzw. entgegen dieser Richtung. Diese Art der Verkippung wird im Rahmen dieser Anmeldung auch als "Anstellung" bezeichnet, um sie von der später beschriebenen, erfindungswesentlichen zweiten Verkippungsmöglichkeit unterscheiden zu können. Durch die Anstellung wird der oben beschriebene Effekt erreicht, wobei im Bearbeitungspunkt eine symmetrische Situation geschaffen wird, in welcher sich die effektive Bearbeitungskurve zu beiden Seiten des Bearbeitungspunktes gleichermaßen verhält bzw. verändert. Im Bild der Ellipse befindet man sich hier an einem Schnittpunkt der entlang der kürzeren Ausdehnung der Ellipse verlaufenden Symmetrieachse mit der Begrenzungslinie der Ellipse.

In einem Versuch konnte bei der Anmelderin so ein Werkstück innerhalb einer vorgegebenen Toleranz mit einem zylinderförmigen Standardfräskopf mit 160 mm Durchmesser mit einer Zeileribreite von 80 mm gefräst werden, wohingegen mit einem Standardkugelfräser mit einem Durchmesser von 50 mm zum Erreichen derselben Toleranz nur Zeilenbreiten 2 mm erzielt werden konnten. Dies bedeutet gegenüber einer für solche Flächen üblichen Bearbeitung mit einem Kugelkopffräser eine Verbesserung um einen Faktor von 40, was sich in einer entsprechenden drastischen Zeitersparnis und damit letztlich Kostenersparnis auswirkt.

Die entscheidende Idee der Erfindung besteht darin, dass, um einen je nach Zielvorgabe der Werkstückoberfläche des zu bearbeitenden Werkstückes asymmetrischen Verlauf der effektiven Bearbeitungskurve (des effektiven Radienverlaufes) im Bereich des Bearbeitungspunktes zu erreichen, die Werkzeuglängsachse gegenüber der Flächennormalen zusätzlich in einer wie im kennzeichnenden Teil des Patentanspruchs 1 angegebenen Weise verkippt werden. Diese Verkippung wird zur Unterscheidung gegenüber der oben beschriebenen Anstellung als "Neigung" beschrieben. Durch eine zusätzliche Neigung wandert im Bild der Ellipse der Bearbeitungspunkt ausgehend von dem oben beschriebenen Schnittpunkt zwischen der entlang der kürzeren Ausdehnung der Ellipse verlaufenden Symmetrieachse und der Begrenzungslinie der Ellipse in Richtung eines der Punkte mit stärkerer Krümmung aus, so dass sich eine unsymmetrische effektive Bearbeitungskurve ergibt, die zur Bearbeitung entsprechend gebildeter Konturen der zur bearbeitenden Oberfläche bei breiter Arbeitsbahn verwendet werden kann.

Wenn im Patentanspruch eine Arbeitskante des Bearbeitungswerkzeuges mit einer im wesentlichen kreis- bzw. kreisringförmigen Kontur genannt ist, so ist hiermit insbesondere gemeint, dass das Bearbeitungswerkzeug in der Verwendung eine solche Arbeitskontur erzeugt. Dass kann am Beispiel von Fräswerkzeugen z.B. durch eine Anzahl von radial aus dem Werkzeug vorstehenden Schneidmessern gebildet sein, die mit ihren Schneidspitzen im wesentlichen auf einem gemeinsamen Kreis angeordnet sind. Dabei ist die Anzahl derartiger Schneidmesser nicht beschränkt, im Rahmen der Erfindung genügt beispielsweise ein einziges Schneidmesser, welches dann auf einer kreisförmigen Bahn umläuft.

Eine Weiterbildung des Verfahrens, wie es in Anspruch 2 angegeben ist, ermöglicht ein besonders einfaches und problemloses Bearbeiten der Werkstückoberfläche. Dadurch, dass die Arbeitskante an der Unterkante des Bearbeitungswerkzeuges angebracht bzw. gebildet ist, wird diegefahr einer Kollision des Werkzeuges an Bereichen der Werkstückoberfläche, die stehen gelassen werden sollen, vermindert.

Grundsätzlich kann das erfindungsgemäße Verfahren gleichermaßen zur Ausbildung konkav wie konvex gekrümmter Oberflächen Verwendung finden. Bei der Bearbeitung konvex gekrümmter Werkstückoberflächen ist jedoch zu beachten, dass verhindert werden muss, dass das Werkzeug mit seiner Werkzeugunterseite mit solchen Bereichen des Werkstückes kollidiert, an denen Material stehengelassen werden soll. Dementsprechend ist es in diesem Fall von Vorteil, wenn, wie in Anspruch 5 beschrieben, das Bearbeitungswerkzeug einen Hohlraum aufweist, in welchen die entsprechend stehen gelassenen Materialbereiche der Werkzeugoberfläche hineinragen können, während das Werkzeug weitere Bereiche der Oberfläche bearbeitet.

Für eine Durchführung des Verfahrens beim Fräsen eignet sich besonders gut eine Fünf-Achsen-Fräsmaschine, da mit dieser sämtliche für das Anstellen bzw. Neigen des Werkzeuges gegenüber der Flächennormalen wie auch das Bewegen des Fräswerkzeuges entlang der Werkstückoberfläche erforderlichen Bewegungen ausgeführt werden können (vgl. Anspruch 4).

Besonders wertvoll ist das erfindungsgemäße Verfahren für solche Werkstückoberflächen, die einen sich verändernden Radienverlauf aufweisen. Dann wird in einer vorteilhaften Variante des Verfahrens ein Grad bzw. Winkel der Verkippung der Werkzeuglängsasche gegenüber der Flächennormalen bei über die Werkstückoberfläche fortschreitendem Werkzeug für jeden Bearbeitungspunkt angepasst, um stets und überall auf der Werkstückoberfläche einen möglichst breiten Bereich mit einem der Zielkurve innerhalb einer vorgegebenen Toleranz entsprechenden Radienverlauf bearbeiten zu können.

Schließlich wird in vorteilhafter Weise bei der Durchführung des erfindungsgemäßen Verfahrens das Bearbeitungswerkzeug zeilenweise entlang im wesentlichen paralleler Bearbeitungswege über die Werkstückoberfläche geführt (vgl. Anspruch 6). Diese Bearbeitungswege sind nicht notwendig netzparallel", sondern können für sich durchaus gekrümmt verlaufen. In der Praxis werden die Bearbeitungswege bzw. -bahnen sogar bevorzugt anhand der vorgegebenen Krümmungsverläufen der Werkstückoberfläche gelegt. Auch dann werden jedoch bevorzugt die einzelnen gekrümmt verlaufenden Zeilen jedenfalls im wesentlichen parallel zueinander abgefahren.

Für die Durchführung des erfindungsgemäßen Verfahren hat es sich allgemein als sinnvoll erwiesen, vor der tatsächlichen Werkstückbearbeitung eine rechnergestützte Simulation durchzuführen, um die für den Arbeitsablauf optimale Parametrierung einer entsprechenden Bearbeitungsmaschine (Fräsmaschine, Schleifmaschine oder dgl.) zu ermitteln und die Maschine entsprechend programmieren zu können.

Im folgenden wird das erfindungsgemäße Verfahren unter Bezugnahme auf die beigefügten Figuren in einem Ausführungsbeispiel noch einmal genauer beschrieben. Dabei werden weitere Vorteile und Merkmale der Erfindung deutlich. Es zeigen:
- Fig. 1: eine schematische Ansicht eines zum spanenden Bearbeiten auf einer gekrümmten Werkstückoberfläche aufgesetzten Bearbeitungswerkzeuges;
- Fig. 2: eine Ansicht wie Fig. 1 aus anderem Blickwinkel;
- Fign.3a und 3b: schematische Darstellung von resultierenden Ellipsen, die sich durch Neigung eines Kreises in einer Projektion ergeben;
- Fig. 4: eine vergrößerte Ausschnittsdarstellung aus Fig. 3a;
- Fig. 5: eine vergrößerte schematische Darstellung eines auf einer Werkstückoberfläche aufgesetzten Bearbeitungswerkzeuges;
- Fig. 6: eine vergrößerte schematische Darstellung eines auf einer Werkstückoberfläche aufgesetzten Bearbeitungwerkzeuges von der Seite zur Verdeutlichung der Neigung; und
- Fign. 7a: bis 7c unterschiedliche Formen möglicher Bearbeitungswerkzeuge zur Durchführung des Verfahrens.

Die Figuren sind reine Schemadarstellungen und insbesondere nicht maßstabsgerecht. Die Figuren wie auch die nachfolgende Beschreibung dienen lediglich der Erläuterung und dem besseren Verständnis der Erfindung, sie beschränken den Umfang der Erfindung nicht.

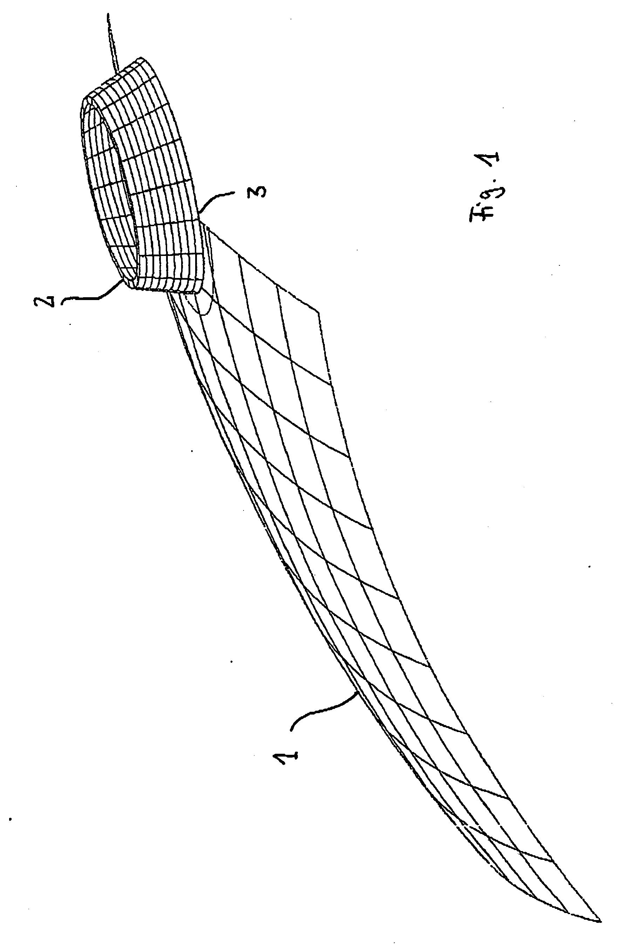

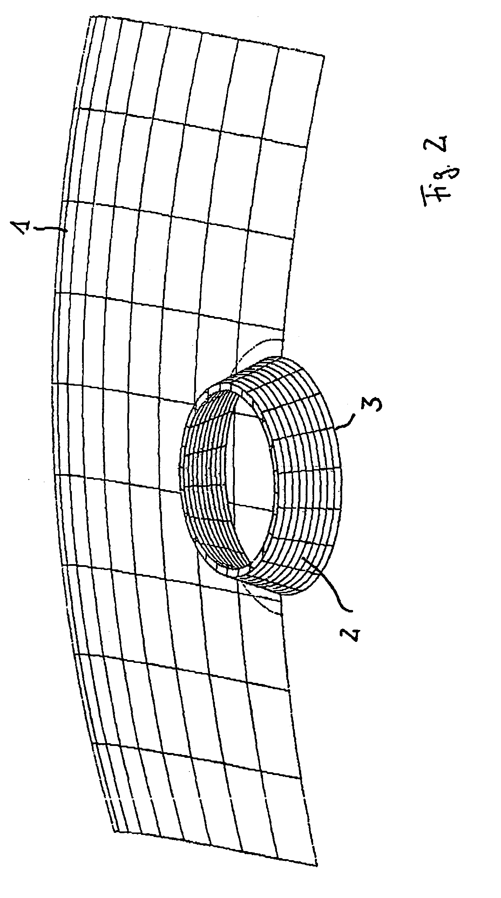

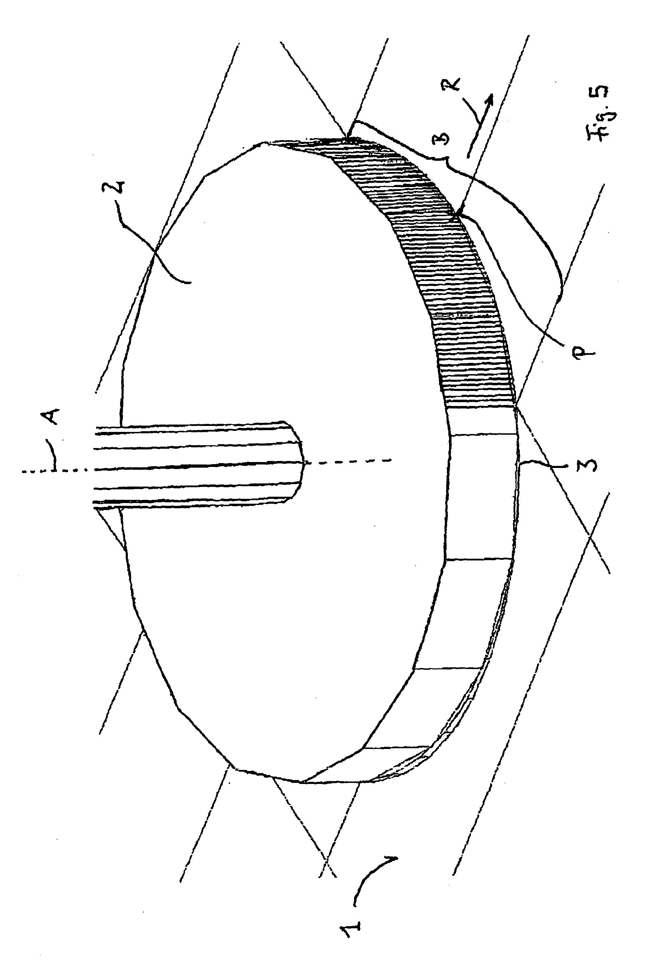

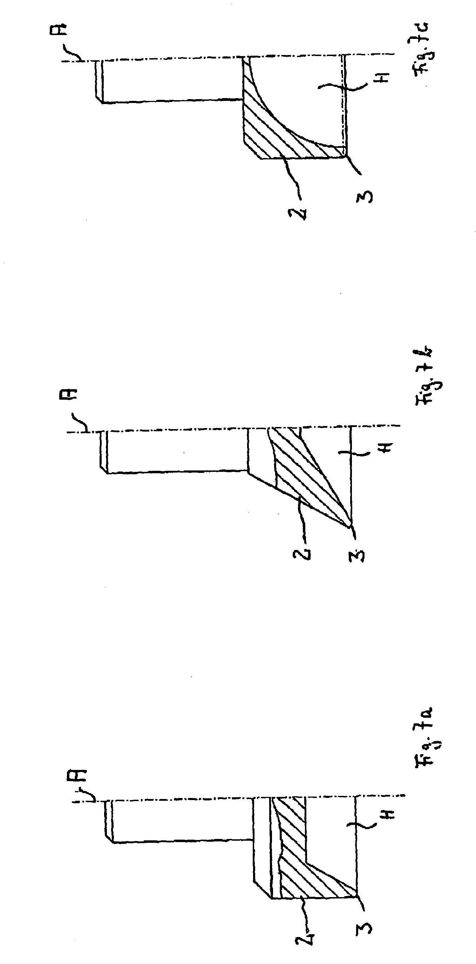

In den Figuren 1 und 2 ist schematisch eine gekrümmte Werkstückoberfläche 1 dargestellt, auf die ein im wesentlichen kegelstumpfförmiges Bearbeitungswerkzeug 2 mit einer Arbeitskante 3 aufgesetzt ist. Zur Durchführung des erfindungsgemäßen Verfahrens ist dabei eine Werkzeuglängsachse A (vgl. Figuren 5 und 7a bis 7c) gegenüber einer hier nicht dargestellten Flächennormalen geneigt, insbesondere zumindest im Sinne der obigen Beschreibung angestellt. Dadurch wird eine effektive Bearbeitungskurve der Arbeitskante 3 erzielt, die bei Wahl eines geeigneten Neigungswinkels über eine möglichst große Breite dem zu erzielenden Radienverlauf bzw. Krümmung der Werkstückoberfläche innerhalb vorgegebener Toleranzen entspricht.

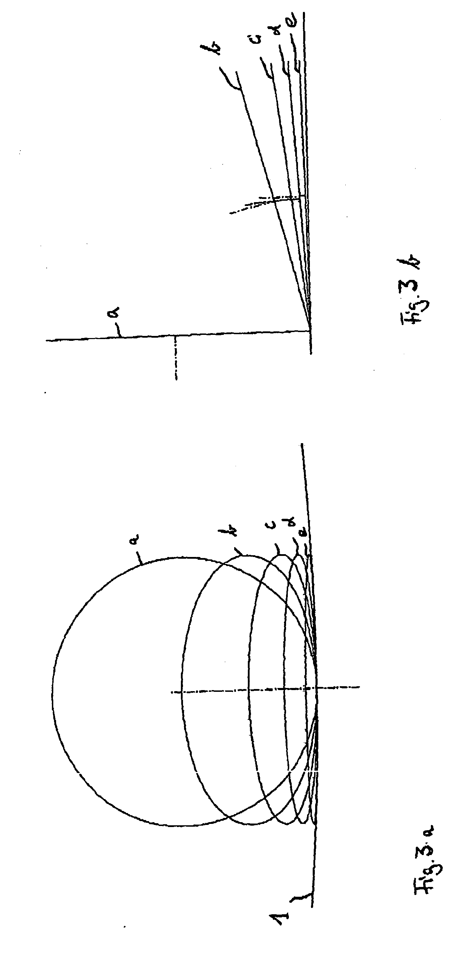

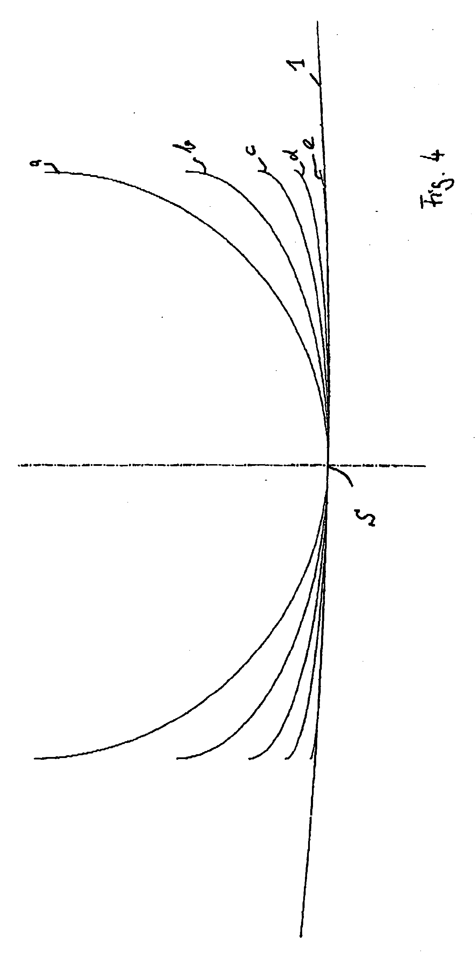

Wie dies erreicht wird, ist schematisch in den Figuren 3a und 3b sowie 4 dargestellt. In den Figuren 3a und 3b ist für unterschiedliche Neigungswinkel ein wirksamer Radius einer kreisförmigen Arbeitskante dargestellt. In diesem Modell wird praktisch eine Projektion eines Kreises auf eine Ebene betrachtet, die gegenüber der Ebene des Kreises geneigt verläuft. Betrifft die Neigung 0° (Fall A) ergibt sich ein Kreis mit dem bekannten Durchmesser bzw. Radius. Bei steigender Neigung (Fälle b) bis e)) werden in der Projektion entsprechend flacher werdende Ellipsen (vgl. Fig. 3a) erhalten. Diese haben in dem in Fig. 4 mit S bezeichneten Schnittpunkt der entlang der kürzeren Erstreckung der Ellipse verlaufenden Symmetrieachse mit der Ellipsenumrandung ausgehend von b) zu e) einen immer größer werdenden Radius.

Dieser kann theoretisch bis zu einem unendlichen Radius gesteigert werden, wenn der Kreis auf eine Gerade abgebildet wird (bei einer Neigung der Kreisebene gegenüber der Projektionsebene von 90°). Auf diese Weise kann in einem immer breiteren Bereich ein Radius einer Werkstückoberfläche 1 innerhalb bestimmter Toleranzen nachgebildet werden. Dieses Prinzip macht sich im dreidimensionalen Raum das erfindungsgemäß Verfahren zueigen. Wird die Werkzeuglängsachse gegenüber der Flächennormalen lediglich im Sinne der obigen Beschreibung angestellt, so fällt ein Bearbeitungspunkt (der Punkt, an dem die Flächennormale betrachtet wird) mit dem Schnittpunkt S zusammen und der Verlauf der Radien zu den Seiten des Bearbeitungspunktes ist symmetrisch. Wird das Werkzeug zusätzlich im Sinne der obigen Beschreibung geneigt, so liegt der Bearbeitungspunkt im Sinne der Darstellung der Fig. 4 rechts oder links von dem Schnittpunkt S, und es ergibt sich eine unsymmetrische Verteilung der Radien entlang der effektiven Bearbeitungslinie zu beiden Seiten des Bearbeitungspunktes.

In Fig. 5 ist noch einmal schematisch dargestellt, wie das Bearbeitungswerkzeug 2 für die Ausführung des erfindungsgemäßen Verfahrens über die gekrümmte Werkstückoberfläche 1 geführt wird. Mit seiner Arbeitskante 3 ist das Werkzeug 2, hier über eine Arbeitsbreite B auf der Werkstückoberfläche 1 wirksam, indem es dort einen Radienvelauf nachbildet, der innerhalb vorgegebener Toleranzbereiche mit der Zielkurve der Werkstückoberfläche übereinstimmt. Der innerhalb der Arbeitsbreite B liegende Abschnitt der Arbeitskante 3 ist durch die Schraffur deutlich gemacht. Mit P ist hier der Bearbeitungspunkt bezeichnet, an welchem die Flächennormale bestimmt wird, gegenüber der die Werkzeuglängsachse A geneigt wird. Mit R schließlich ist die Bewegungsrichtung des Bearbeitungswerkzeuges 2 entlang der Werkstückoberfläche 1 benannt. Die Bewegung des Bearbeitungswerkzeuges 2 entlang der Werkstückoberfläche 1 kann entweder gradlinig erfolgen oder entlang gekrümmter Linien. Im letzteren Fall ist die Bewegungsrichtung R eine innerhalb einer an den Bearbeitungspunkt P gelegten Tangentialebene verlaufende Tangente an die Bewegungslinie.

Entscheidend ist, dass durch das erfindungsgemäße Verfahren eine deutlich messbare Arbeitsbreite B erzielt werden kann, gegenüber einer ansonsten nahezu punktuellen Bearbeitung bei klassischen Verfahren.

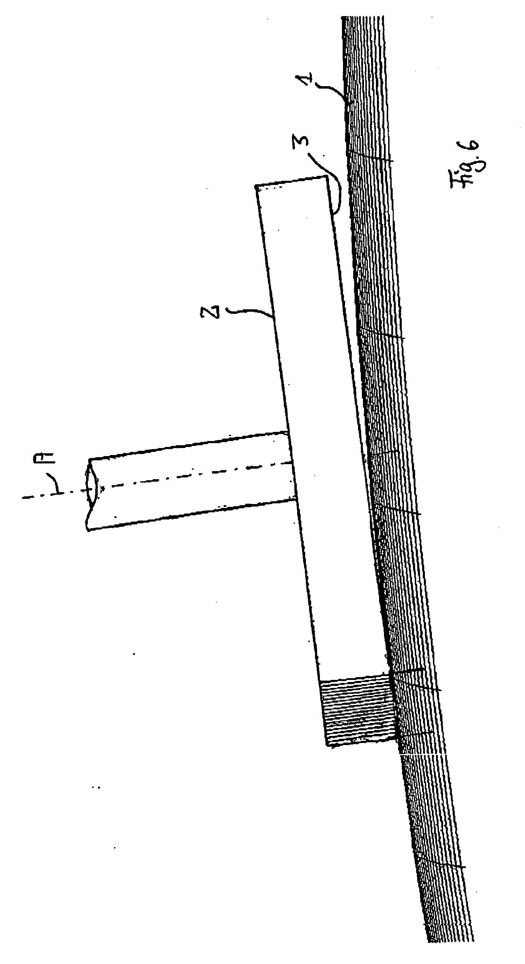

In Fig. 6 ist in einer schematischen und vergrößerten Darstellung noch einmal ein auf eine Werkstückoberfläche 1 aufgesetztes Bearbeitungswerkzeug 2 dargestellt. In dieser Darstellung ist besonders gut die Verkippung der Werkzeuglängsachse A gegenüber der Flächennormalen zu erkennen. Auch hier ist wiederum der wirksame Bereich der Arbeitskante 3 schraffiert dargestellt.

In den Figuren 7a bis 7c sind unterschiedliche mögliche Formen eines Bearbeitungswerkzeuges 2 dargestellt. Allen Formen ist gemein, dass diese im Bereich einer unteren Fläche, an der die Arbeitskante 3 anschließt, einen Hohlraum H ausbilden. Dieser dient bei der Bearbeitung von konvex gekrümmten Werkzeugoberflächen einer Aufnahme vorstehender Bereiche der Werkstückoberfläche, um so eine Kollision des Bearbeitungswerkzeuges 2 mit der Werkstückoberfläche 1 zu verhindern. Bei der Bearbeitung konkav gekrümmter Werkstückoberflächen können Werkzeuge ohne Hohlraum H verwendet werden.

Insbesondere ein wie in Fig. 7b gezeigt geformtes Bearbeitungswerkzeug 2 eignet sich besonders, um Übergänge in einer Werkzeugoberfläche mit geringen Radien zu bearbeiten, ohne dass das Bearbeitungswerkzeug 2 an stehen gebliebene Wandbereiche der Werkstückoberfläche anstößt.

Die in den Figuren 7a bis 7c gezeigten Formen sind rein schematisch. In der tatsächlichen Umsetzung werden z.B. bei Fräswerkzeugen entlang der Arbeitskante 3 verteilt nach außen vorstehende Schnittkanten angeordnet, die auf einem gemeinsamen Kreis angeordnet sind.

### Bezugszeichenliste

- 1: Werkstückoberfläche
- 2: Bearbeitungswerkzeug
- 3: Arbeitskante

- A: Werkzeuglängsachse
- B: Arbeitsbreite
- H: Hohlraum
- P: Bearbeitungspunkt
- R: Bewegungsrichtung
- S: Schnittpunkt

## Patentansprüche

1. Verfahren zur spanenden Bearbeitung gekrümmter Werkstückoberflächen bei dem ein um eine Werkzeuglängsachse rotierendes, im wesentlichen zylinder- oder kegelförmiges Bearbeitungswerkzeug mit einer Arbeitskante bzw. -linie, welche eine im wesentlichen kreis- bzw. kreisringförmige Kontur aufweist, entlang eines Bearbeitungsweges über die Werkstückoberfläche geführt wird, wobei das Bearbeitungswerkzeug mit seiner Werkzeuglängsachse gegenüber der Flächennormalen der Werkstückoberfläche an einem Bearbeitungspunkt derart verkippt wird, dass die Arbeitskante eine auf der Werkstückoberfläche wirksame, effektive Bearbeitungslinie mit einem der Zielkurve im Bereich des Bearbeitungspunktes annähernd entsprechenden Radienverlauf bildet, wobei hierfür zum einen das Bearbeitungswerkzeug mit seiner Werkzeuglängsachse innerhalb einer durch die Flächennormale der Werkstückoberfläche an dem Bearbeitungspunkt und die innerhalb der Tangentialebene der Werkstückoberfläche an dem Bearbeitungspunkt liegende Tangente des Bearbeitungsweges in dem Bearbeitungspunkt aufgespannten Ebene gegenüber der Flächennormalen verkippt bzw. angestellt wird, **dadurch gekennzeichnet, dass** zum anderen das Bearbeitungswerkzeug zudem mit seiner Werkzeuglängsachse in einer durch die Flächennormale der Werkstückoberfläche an dem Bearbeitungspunkt und die innerhalb der Tangentialebene der Werkstückoberfläche an dem Bearbeitungspunkt liegende Senkrechte zu der ebenfalls innerhalb der letztgenannten Ebene liegenden Tangenten des Bearbeitungsweges in dem Bearbeitungspunkt aufgespannten Ebene gegenüber der Flächennormalen verkippt bzw. geneigt wird.

2. Verfahren nach Anspruch 1, **dadurch gekennzeichnet, dass** die Arbeitskante bzw. -linie durch eine in einer Ebene senkrecht zu der Werkzeuglängsachse liegende, bei der Bearbeitung der Werkstückoberfläche zugewandte Unterkante des Bearbeitungswerkzeuges gebildet ist.

3. Verfahren nach Anspruch 2, **dadurch gekennzeichnet, dass** für die Bearbeitung von konvex gekrümmten Werkstückoberflächen ein Bearbeitungswerkzeug verwendet wird, welches in seinem innerhalb der Kontur der Arbeitskante liegenden Bereich einen in Richtung der Werkzeuglängsachse gesehen hinter die Position der Arbeitskante zurückreichenden Hohlraum aufweist.

4. Verfahren nach einem der vorhergehenden Ansprüche, **dadurch gekennzeichnet, dass** das Bearbeitungswerkzeug ein Fräswerkzeug ist und dass eine 5-Achs-Fräsmaschine verwendet wird, in der das Fräswerkzeug installiert ist.

5. Verfahren nach einem der vorhergehenden Ansprüche, **dadurch gekennzeichnet, dass** der Verkippungswinkel der Werkzeuglängsachse gegenüber der Flächennormalen beim Fortschreiten des Bearbeitungswerkzeuges entlang des Bearbeitungsweges in jedem Bearbeitungspunkt anhand des in der Umgebung dieses Bearbeitungspunktes vorgegebenen Zielradius angepasst wird.

6. Verfahren nach einem der vorhergehenden Ansprüche, **dadurch gekennzeichnet, dass** das Bearbeitungswerkzeug zeilenweise entlang im wesentlichen paralleler Bearbeitungswege über die Werkstückoberfläche geführt wird.

## Claims

1. Method for machining curved workpiece surfaces in which a substantially cylindrical or conical machining tool rotating about a tool longitudinal axis and having a working edge or line provided with a substantially circular or annular contour, is guided along a machining path over the workpiece surface, the machining tool with its tool longitudinal axis being tilted relative to the surface normal of the workpiece surface at a machining point in such a way that the working edge forms an effective machining line acting on the workpiece surface with a radius path approximately corresponding to the target curve in the vicinity of the machining point and for this purpose on the one hand the machining tool with its tool longitudinal axis is tilted or set relative to the surface normal in the plane fixed within a plane fixed in the machining point through the surface normal of the workpiece,surface at the machining point and the tangent of the machining path within the tangential plane of the workpiece surface at the machining point, **characterized in that** on the other hand the machining tool with its tool longitudinal axis is tilted or inclined to the plane with respect to the surface normal fixed in a perpendicular through the surface normal of the workpiece surface at the machining point and within the tangential plane of the workpiece surface at the machining point to the tangent of the machining path in the machining point also located in the latter plane.

2. Method according to claim 1, **characterized in that** the working edge or plane is formed by a lower edge of the machining tool facing the tool surface during machining and located in a plane perpendicular to the tool longitudinal axis.

3. Method according to claim 2, **characterized in that** for machining convexly curved workpiece surfaces use is made of a machining tool which, in its area located within the contour of the working edge, has a cavity extending behind the working edge position when considered in the tool longitudinal axis direction.

4. Method according to one of the preceding claims, **characterized in that** the machining tool is a milling tool, use being made of a five axis milling machine in which the milling tool is installed.

5. Method according to one of the preceding claims, **characterized in that** the tilting angle of the tool longitudinal axis with respect to the surface normal during the advance of the machining tool along the machining path in each machining point is adapted with the aid of the target radius preset in the area surrounding said machining point.

6. Method according to one of the preceding claims, **characterized in that** the machining tool is guided line-by-line along substantially parallel machining paths over the workpiece surface.

## Revendications

1. Procédé d'usinage de surfaces de pièce courbées, dans le cadre duquel un outil d'usinage essentiellement cylindrique ou conique, pivotant autour d'un axe longitudinal de l'outil avec une arête et/ou une ligne de travail, qui présente un contour essentiellement circulaire ou en forme de couronne, est guidé le long d'une trajectoire d'usinage sur la surface de la pièce, l'outil d'usinage étant basculé avec son axe longitudinal de l'outil par rapport à la normale à la surface de la pièce à un point d'usinage de telle sorte que l'arête de travail forme une ligne d'usinage effective, efficace sur la surface de la pièce avec un tracé de rayon correspondant approximativement à la courbe cible dans la zone du point d'usinage, l'outil d'usinage étant pour ce faire basculé et/ou ajusté d'une part avec son axe longitudinal d'outil au sein d'un plan monté au travers de la normale à la surface de la pièce au point d'usinage et au travers de la tangente de la trajectoire d'usinage se trouvant au sein du plan tangentiel de la surface de la pièce au point d'usinage dans le point d'usinage par rapport à la normale à la surface, **caractérisé en ce que** d'autre part, l'outil d'usinage est basculé et/ou incliné de plus avec son axe longitudinal d'outil dans un plan monté au travers de la normale à la surface de la pièce au point d'usinage et au travers de la perpendiculaire se trouvant au sein du plan tangentiel de la surface de la pièce au point d'usinage par rapport à la tangente de la trajectoire d'usinage se trouvant également au sein de ce dernier plan dans le point d'usinage par rapport à la normale à la surface.

2. Procédé selon la revendication 1, **caractérisé en ce que** l'arête et/ou la ligne de travail est formée par une arête inférieure de l'outil d'usinage se trouvant dans un plan de manière perpendiculaire par rapport à l'axe longitudinal de l'outil, tournée lors de l'usinage vers la surface de la pièce.

3. Procédé selon la revendication 2, **caractérisé en ce que** pour l'usinage de surfaces de pièce courbées de manière convexe, un outil d'usinage est utilisé, lequel présente dans sa zone se trouvant au sein du contour de l'arête de travail un espace creux remontant si l'on considère la direction de l'axe longitudinal de l'outil derrière la position de l'arête de travail.

4. Procédé selon l'une quelconque des revendications précédentes, **caractérisé en ce que** l'outil d'usinage est un outil à fraiser, et **en ce qu'**une fraiseuse à 5 axes est utilisée, dans laquelle est installé l'outil à fraiser.

5. Procédé selon l'une quelconque des revendications précédentes, **caractérisé en ce que** l'angle de basculement de l'axe longitudinal de l'outil par rapport à la normale à la surface est adapté lors de l'avancement de l'outil d'usinage le long de la trajectoire d'usinage dans chaque point d'usinage au moyen du rayon cible prescrit dans l'entourage de ce point d'usinage.

6. Procédé selon l'une quelconque des revendications précédentes, **caractérisé en ce que** l'outil d'usinage est guidé ligne par ligne le long de la trajectoire d'usinage essentiellement parallèle sur la surface de la pièce.
